# EUROPEAN PATENT SPECIFICATION

(11) **EP 3 851 318 B1**
(45) Date of publication and mention of the grant of the patent: **26.04.2023**
(21) Application number: 19859073.9
(22) Date of filing: 20.08.2019
(51) Int. Cl.: B60N 2/14, A47C 3/18, B60N 2/06, B60N 2/01, B60N 2/015, B60N 2/07, B60N 2/24, B60N 2/08, B64D 11/06

(54) **SEAT ARRANGEMENT SWITCHING UNIT**
SITZANORDNUNGWECHSELEINHEIT
UNITÉ DE CHANGEMENT D'AGENCEMENT DE SIÈGES

(30) Priority: 11.09.2018 JP 2018169367
(43) Date of publication of application: 21.07.2021
(73) Proprietor: THK Co., Ltd., Tokyo 108-8506 (JP)
(72) Inventor: HOSAKA, Eiji, Tokyo 108-8506 (JP); SHOYU, Takahiro, Tokyo 108-8506 (JP); KURIBAYASHI, Hiroomi, Tokyo 108-8506 (JP); KANEKO, Akito, Tokyo 108-8506 (JP)
(74) Representative: Grünecker Patent- und Rechtsanwälte PartG mbB
(86) International application number: PCT/JP2019/032346
(87) International publication number: WO 2020/054329

(56) References cited:
- DE-A1- 3 707 293
- DE-A1-102014 224 560
- JP-A- 2004 299 552
- JP-A- 2014 226 964
- JP-U- H0 264 437
- JP-Y2- S6 332 741
- US-A- 5 082 328
- US-A1- 2006 108 848
- US-A1- 2010 001 169
- US-A1- 2016 107 544
- US-A1- 2016 152 163

## Description

### TECHNICAL FIELD

The present invention relates to a switching unit configured to suitably change a state of arrangement of seats provided in a transport vehicle such as a railway vehicle or a bus.

### BACKGROUND ART

In a transport vehicle such as a railway vehicle or a bus, passenger seats are generally arranged along a side wall of a vehicle cabin. A space in the middle of the vehicle cabin is used as a standing space or an aisle space. As an arrangement of the seats in the vehicle cabin, a so-called long arrangement and a so-called cross arrangement are common. In the long arrangement, the seats are arranged in such a manner that backrest surfaces thereof are substantially parallel to a traveling direction of the vehicle. In the cross arrangement, the seats are arranged in such a manner that the backrest surfaces thereof are oriented in the traveling direction of the vehicle or a direction opposite to the traveling direction.

In the former arrangement, that is, the long arrangement, a passenger sits with his/her back oriented toward the side wall of the vehicle cabin. Thus, the standing or aisle space can be set large. Thus, the long arrangement is suitable for a large number of passengers. On the other hand, a sitting passenger is laterally shaken at a time of acceleration and deceleration of the vehicle, and thus a satisfaction level in sitting comfort tends to be low. Meanwhile, in the latter arrangement, that is, the cross arrangement, the backrest surfaces of the seats are oriented in the traveling direction of the vehicle. Thus, a satisfaction level in sitting comfort tends to be higher than that given in the case of the long arrangement. In the cross arrangement, however, the seats significantly project from the side wall of the vehicle cabin toward the space in the middle. Thus, the standing or aisle space cannot be set large. Thus, the cross arrangement is not suitable for a large number of passengers.

In order to complement advantages and disadvantages of the two kinds of seat arrangements mentioned above, an arrangement switching device for vehicle seats is disclosed in Patent Literature 1. The arrangement switching device disclosed in Patent Literature 1 enables switching between the long arrangement and the cross arrangement. The switching device includes a fixed base, a slide base, and a seat. The fixed base is installed on a floor surface of a vehicle. The slide base is provided so as to be slidable in a width direction of the vehicle with respect to the fixed base. The seat is mounted through intermediation of a rotary main shaft so as to be rotatable with respect to the slide base. The seat can be moved together with the rotary shaft in the width direction of the vehicle, specifically, toward the aisle space in the middle of the vehicle by moving the slide base. In this manner, the seat can be rotated by 90 degrees in accordance with the long arrangement or the cross arrangement while interference of the seat with the side wall of the vehicle cabin is prevented. Further relevant prior art is described in DE102014224560.

### CITATION LIST

### PATENT LITERATURE

[PTL 1] JP 2003-175752 A

### DISCLOSURE OE THE INVENTION

### PROBLEMS TO BE SOLVED BY INVENTION

In the arrangement switching device for vehicle seats, which is disclosed in Patent Literature 1, the rotary shaft that supports the rotation of the seat is movable only in the width direction of the vehicle, and is unmovable in the traveling direction of the vehicle. Thus, a position at which the seat is fixed cannot be changed in the traveling direction. As a result, when a distance between the seats in the cross arrangement is set large, a gap is formed between the seats adjacent to each other in the long arrangement. Thus, there arises a problem in that a sufficient number of seats cannot be ensured for a length of the vehicle. Meanwhile, when an arrangement pitch of the rotary shafts is selected so as to prevent formation of a gap between the seats adjacent to each other in the long arrangement, a distance between the seats adjacent to each other in a fore-and-aft direction is reduced in the cross arrangement.
Thus, there arises a problem in that a leg space for a sitting passenger becomes tight.

### MEANS FOR SOLVING THE PROBLEMS

For solving the aforementioned problem, there is provided a switching unit for a seat arrangement having the features defined in claim 1. Further preferred embodiments are defined in the dependent claims. The present invention has been made to solve the problems described above, and has an object to provide a switching unit for a seat arrangement, which enables an arrangement of seats to be freely switched to a long arrangement or a cross arrangement and enables an arrangement distance between the seats in a traveling direction of a vehicle to be freely adjusted when the seats are arranged in the long arrangement.

That is, according to the present invention, there is provided a switching unit, which is configured to change a direction of arrangement of seats in a vehicle cabin of a vehicle, the switching unit including: a support base, which is to be fixed to a vehicle cabin, and is configured to support the seats; a rotating support, which is fixed to the support base, and is configured to serve as a center of rotation of the seats; a seat mounting frame is configured to allow the seats to be fixed thereto; linear guides, which are arranged between the seat mounting frame and the rotating support, and is configured to guide movement of the seat mounting frame with respect to the rotating support along the width direction of the seat; a rotation stopping member, which is provided to the support base, and is configured to lock rotation of the seat mounting frame caused by the rotating support; and a seat fixing member configured to lock movement of the seat mounting frame with respect to the rotating support.

### EFFECTS OF THE INVENTION

According to one embodiment of the present invention, the seat mounting frame configured to support the seats can be freely rotated with respect to the support base. Thus, the arrangement of the seats can be freely switched to the long arrangement or the cross arrangement. Further, the seat mounting frame can be freely moved in the width direction of the seat owing to actions of the linear guides. Thus, when the arrangement of the seats is changed, interference between the seats and a side wall of the vehicle cabin can be prevented. In addition, a distance between the seats in the long arrangement and a distance between the seat in the cross arrangement and the side wall of the vehicle cabin can be freely adjusted.

### BRIEF DESCRIPTION OF DRAWINGS

FIG. 1 is a schematic view for illustrating an example of a cross arrangement of seats in a vehicle cabin.
FIG. 2 is a schematic view for illustrating an example of a long arrangement of the seats in the vehicle cabin.
FIG. 3 is an exploded view for illustrating an example of a switching unit to which the present invention is applied.
FIG. 4 is a perspective view for illustrating an example of a linear guide that can be used for the switching unit according to the present invention.
FIG. 5 is a perspective view for illustrating a coupling relationship between a seat mounting frame and a rotating support.
FIG. 6 is a schematic view for illustrating a relationship among the linear guides and a seat fixing member.
FIG. 7 is a bottom view for illustrating an example of the rotating support.
FIG. 8 is a schematic view for illustrating a configuration of a rotation stopping member.
FIG. 9 is a plan view for illustrating a long arrangement of the seats, which is achieved by the switching unit according to the present invention.
FIG. 10 is a plan view for illustrating a first procedure of changing the long arrangement to the cross arrangement.
FIG. 11 is a plan view for illustrating a second procedure of changing the long arrangement to the cross arrangement.
FIG. 12 is a plan view for illustrating a third procedure of changing the long arrangement to the cross arrangement.

### MODE FOR CARRYING OUT THE INVENTION

A switching unit for a seat arrangement according to the present invention is now described in detail with reference to the accompanying drawings.

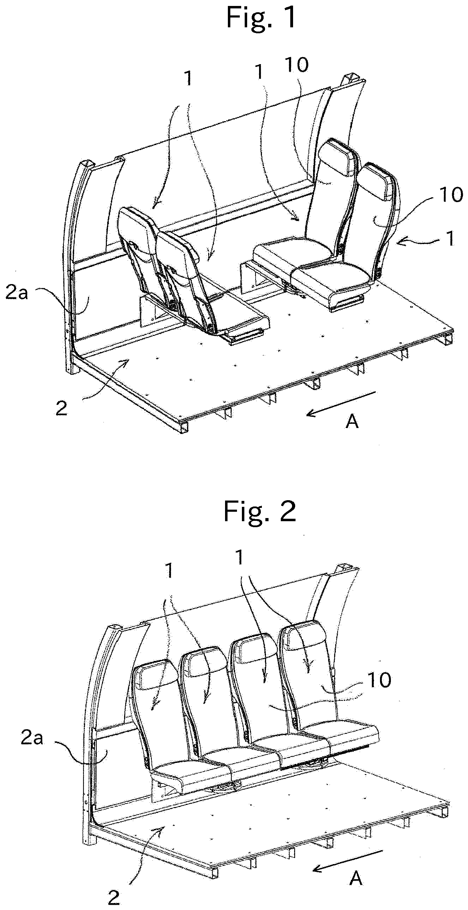

FIG. 1 and FIG. 2 are views for illustrating examples of arrangement of seats 1 in a vehicle cabin of a railway vehicle under a state in which the vehicle is imaginarily cut in the middle of a vehicle cabin 2 in a width direction thereof. In both of the examples of arrangement illustrated in FIG. 1 and FIG. 2, the seats 1 are provided along a side wall 2a of the vehicle cabin 2. A space in the middle of the vehicle cabin 2 in the width direction is used for a standing space or an aisle space for passengers. FIG. 1 is an illustration of a so-called "cross arrangement" in which backrest surfaces 10 of the seats 1 are oriented in a traveling direction A of the vehicle or a direction opposite to the traveling direction. Meanwhile, FIG. 2 is an illustration of a so-called "long arrangement" in which the seats 1 are arranged in such a manner that the backrest surfaces 10 thereof are in parallel to the traveling direction A of the vehicle.

The switching unit for a seat arrangement according to the present invention is configured to enable the seats 1, which are arranged in the cross arrangement, to be rearranged in the long arrangement, or enable the seats 1, which are arranged in the long arrangement, to be rearranged in the cross arrangement.

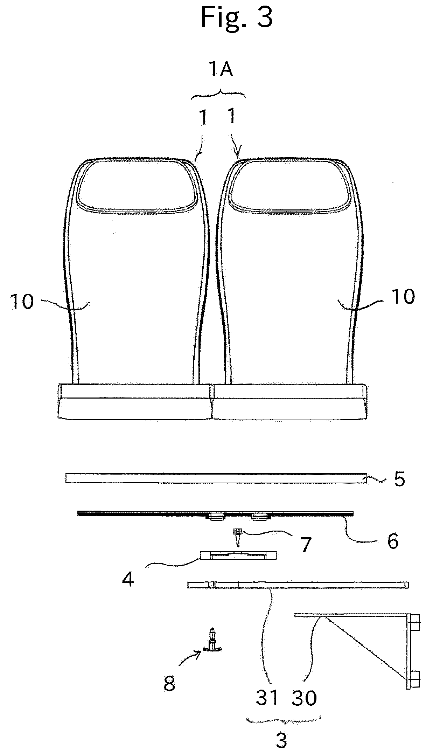

FIG. 3 is a view for illustrating an example of the switching unit for a seat arrangement according to the present invention, and is an exploded view of components of the switching unit. The switching unit illustrated in FIG. 3 includes a support base 3, a rotating support 4, a seat mounting frame 5, and linear guides 6. The support base 3 is fixed to the vehicle cabin 2, and is configured to support the seats 1. The rotating support 4 is fixed to the support base 3, and is configured to serve as a center of rotation of the seats 1. The seat mounting frame 5 is configured to allow the seats 1 to be fixed thereto. The linear guides 6 are each provided along a width direction of the seat 1, and are arranged between the seat mounting frame 5 and the rotating support 4.

In this embodiment, the support base 3 includes a support member 30 and a base plate 31 (see FIG. 3) . The support member 30 has a substantially L-like shape, and is fixed to the side wall of the vehicle cabin. The base plate 31 is supported by the support member 30 from below. The rotating support 4 is fixed to the base plate 31. For the support base 3, there is employed a mode in which the support base 3 projects from the side wall 2a of the vehicle cabin 2 toward the middle of the vehicle cabin 2. This mode is employed so as to effectively use a space below the seats 1. Thus, the mode in which the support base 3 is provided is not limited to that described above. For example, the support base 3 may be fixed to a floor surface of the vehicle cabin 2.

The seat mounting frame 5 is formed in an elongated shape in the width direction of each of the seats 1 so that a plurality of the seats 1 can be arranged in parallel. In this embodiment, two seats 1 fixed to the seat mounting frame 5 are integrated to form a seat set 1A. An arrangement of the seat set 1A can be changed by the switching unit. The number of seats 1 arranged in parallel on the seat mounting frame 5 may be a suitable number. For example, three seats may be integrated to form the seat set.

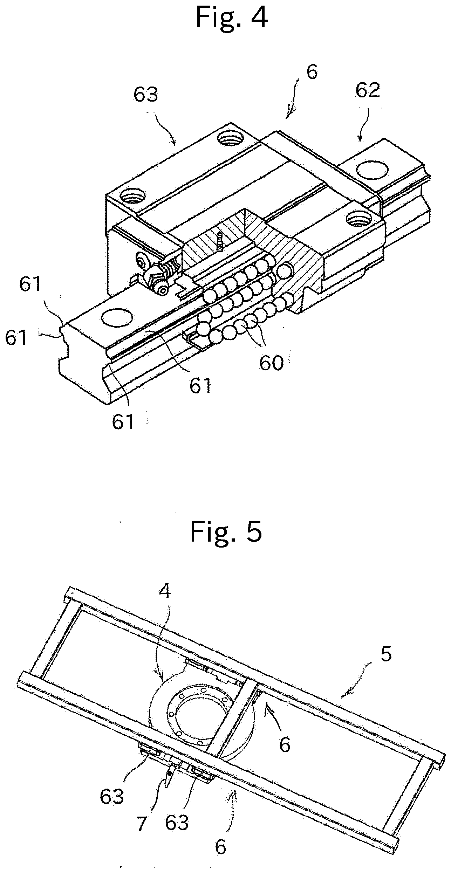

FIG. 4 is a view for illustrating an example of the linear guide 6 to be fixed to the seat mounting frame 5. The linear guide 6 includes a track rail 62 and moving blocks 63. The track rail 62 has rolling surfaces 61 for rolling elements 60 such as balls or rollers. The rolling surfaces 61 are formed along a longitudinal direction of the track rail 62. Each of the moving blocks 63 freely makes a linear motion along the longitudinal direction of the track rail 62. Each of the moving blocks 63 is assembled to the track rail 62 through intermediation of a plurality of rolling elements 60. An endless circulation path for the rolling elements 60 is formed inside each of the moving blocks 63. Each of the moving blocks 63 can bear any load acting on surfaces orthogonal to the longitudinal direction of the track rail 62 under a state in which each of the moving blocks 63 is assembled to the track rail 62.

As illustrated in FIG. 5, in this embodiment, two linear guides 6 are provided to the seat mounting frame 5. Two track rails 62 are fixed to a lower surface of the seat mounting frame 5 so as to be in parallel. The longitudinal direction of the track rail 62 matches a longitudinal direction of the seat mounting frame 5, specifically, a width direction of the seat set 1A. Meanwhile, two moving blocks 63 are mounted to each of the track rails 62. The moving blocks 63 are fixed to the rotating support 4. Thus, the seat mounting frame 5 can be freely moved together with the track rails 62 in the width direction of the seat set 1A with respect to the rotating support 4.

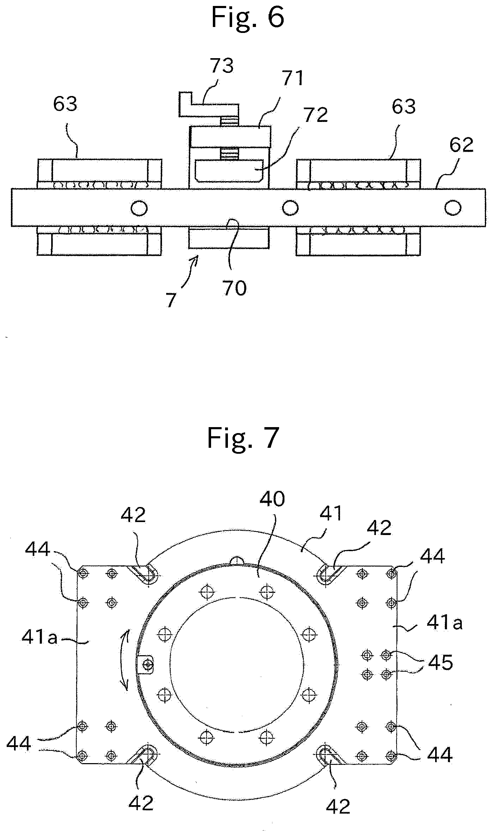

Further, a seat fixing member 7 configured to lock movement of the seat mounting frame, which is performed through the linear guides 6, is provided to the rotating support 4. FIG. 6 is a view for illustrating a positional relationship among the seat fixing member 7 and the linear guides 6. In FIG. 6, illustration of the seat mounting frame and the rotating support is omitted. The seat mounting frame 5 is located on a near side in FIG. 6, and the rotating support 4 is located on a far side in FIG. 6.

The seat fixing member 7 is fixed to the rotating support 4 in such a manner as to be located between the two moving blocks 63 assembled to the track rail 62. The seat fixing member 7 includes a main body portion 71, a pressing plate 72, and a handle portion 73. The main body portion 71 has a pressure-receiving surface 70 to be brought into contact with one side surface of the track rail 62. The pressing plate 72 is to be brought into contact with another side surface of the track rail 62. The handle portion 73 is screwed into the main body portion 71 to move the pressing plate 72 forward and backward with respect to the track rail 62. The handle portion 73 is turned to move the pressing plate 72 so that the track rail 62 is sandwiched between the pressing plate 72 and the pressure-receiving surface 70 to thereby fix the track rail 62. In this manner, the movement of the track rails 62 with respect to the rotating support 4 can be locked. Specifically, with use of the seat fixing member 7, the movement of the seat mounting frame 5 with respect to the rotating support 4 is locked. As a result, the seat mounting frame can be fixed at a suitable position with respect to the support base.

FIG. 7 is a view for illustrating an example of the rotating support 4 provided between the support base 3 and the linear guides 6. The rotating support 4 includes an inner ring 40 and an outer ring 41. The inner ring 40 and the outer ring 41 are rotatable with respect to each other. Any one of the inner ring 40 and the outer ring 41 is fixed to the base plate 31 of the support base 3, and another one thereof is fixed to the moving blocks 63 of the linear guides 6. In this embodiment, the inner ring 40 is fixed to the base plate 31, and the outer ring 41 is fixed to the moving blocks 63. Thus, the outer ring 41 has two flange portions 41a configured to fix the moving blocks 63 thereon. A plurality of mounting holes 44 for fixing bolts are formed in each of the flange portions 41a. Further, the main body portion of the seat fixing member 7 is also fixed to one of the flange portion 41a, and mounting holes 45 for fixing bolts for the fixation of the seat fixing member 7 are formed in one of the flange portion 41a.

A plurality of rolling elements such as balls or rollers are arranged between the inner ring 40 and the outer ring 41. When the rolling elements roll between the inner ring 40 and the outer ring 41, the outer ring 41 can be freely rotated with respect to the inner ring 40 fixed to the base plate 31. The rolling elements may be made of any of a resin and a metal. In view of preventing generation of rattling noise that may be caused when vibration acts, use of the rolling elements made of a resin is preferred. When the rolling elements made of a resin are used, it is preferred that rolling elements made of a metal be mixed at a predetermined rate with respect to the rolling elements made of a resin in view of prevention of separation between the inner ring 40 and the outer ring 41 at a time of overload.

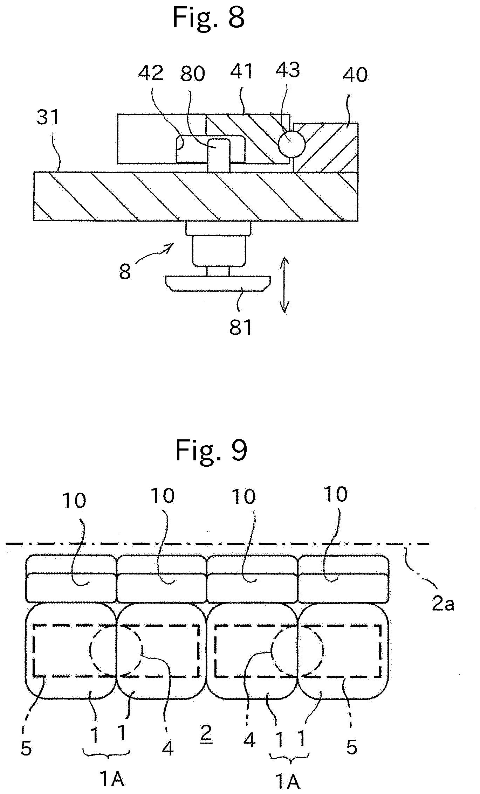

As illustrated in FIG. 8, a rotation stopping member 8 is provided to the base plate 31. The rotation stopping member 8 is configured to lock rotation of the outer ring 41 of the rotating support 4 with respect to the base plate. The rotation stopping member 8 includes a stopper pin 80 passing through the base plate 31. The stopper pin 80 is always urged toward the outer ring 41 by a coil spring (not shown) built in the rotation stopping member 8. Thus, an upper end of the stopper pin 80 always projects upward beyond the base plate 31. Further, an operation handle 81 is provided to a lower end of the stopper pin 80. When the operation handle 81 is pulled downward, the stopper pin 80 is retracted into the base plate 31. In FIG. 8, rolling elements 43 are arranged between the inner ring 40 and the outer ring 41.

Locking grooves 42 are formed in a lower surface of the outer ring 41, which is opposed to the base plate 31. A distal end of the stopper pin 80, which projects upward beyond the base plate 31, is fitted into the locking groove 42. As illustrated in FIG. 7, the outer ring 41 has a plurality of locking grooves 42. The locking grooves 42 are formed around a center of rotation of the outer ring 41 at predetermined angular intervals. In the illustrated example, four locking grooves 42 are formed at intervals of 90 degrees. The locking grooves 42 allow the outer ring 41 to be fixed at four positions through rotation of the outer ring 41 by 90 degrees with respect to the base plate 31 at a time. The number of the positions at which the locking grooves 42 are formed in the outer ring 41 are not limited to four. Design may be suitably changed in such a manner that, for example, eight locking grooves are formed at intervals of 45 degrees.

In the switching unit for a seat arrangement according to this embodiment, which has the configuration described above, the linear guides 6 and the rotating support 4 are provided between the support base 3 and the seat mounting frame 5. Actions of the linear guides 6 enable the seat mounting frame 5 to be moved in the width direction of the seat set 1A with respect to the support base 3. At the same time, actions of the rotating support 4 enable the seat mounting frame 5 to be rotated with respect to the support base 3. Specifically, the seat set 1A which is installed in the vehicle cabin 2 of the vehicle with use of the switching unit can be moved in the width direction with respect to the support base 3 and, in addition, be rotated with respect to the support base 3. The arrangement of the seats 1 in the vehicle cabin 2 can be suitably changed with use of the functions described above.

Next, a procedure of changing the arrangement of the seats 1 from the long arrangement (see FIG. 2) to the cross arrangement (see FIG. 1) in the vehicle cabin 2 with use of the switching unit is described. FIG. 9 is a plan view for illustrating an example in which the seats 1 are arranged in the long arrangement along the side wall 2a (indicated by a long dashed short dashed line of FIG. 9) of the vehicle cabin 2. The seats 1 are grouped into the seat sets 1A, each including two seats 1 integrated with each other, and each of the seat sets 1A is mounted to the switching unit. In the long arrangement, each of the seats 1 is arranged with the backrest surface 10 oriented in a direction toward the middle of the vehicle cabin 2 (downward direction of FIG. 9).

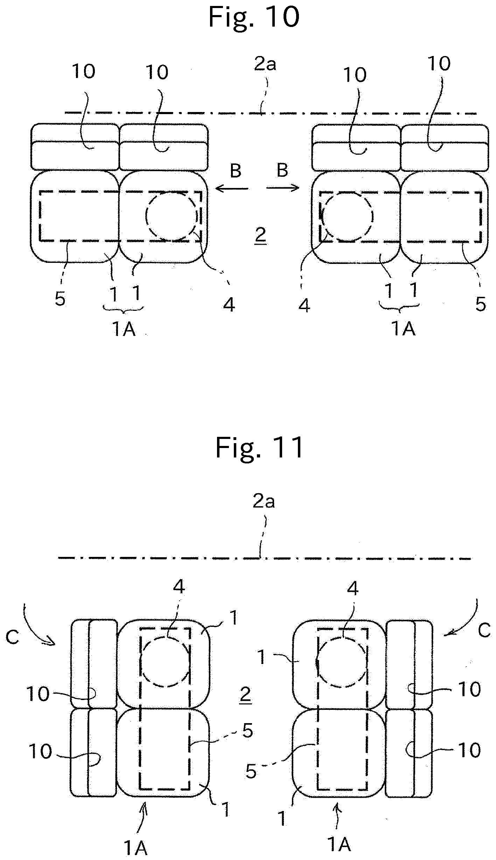

When the long arrangement is changed to the cross arrangement, the seat fixing member 7, which has gripped the track rail 62, is first released from the track rail 62 so as to allow free movement of the seat mounting frame 5 with respect to the rotating support 4. After that, as illustrated in FIG. 10, the seat sets 1A, each being fixed to the seat mounting frame 5, are moved in the width direction (direction indicated by an arrow B) of the seat sets 1A. The linear guides 6 provided between the rotating support 4 and the seat mounting frame 5 can bear any load acting in a direction orthogonal to a moving direction of the track rails 62. Thus, even when a center of gravity of the seat set 1A is considerably shifted from a position above the rotating support 4, the seat set 1A is held on the support base 3 without being inclined.

After completion of the movement of each of the seat sets 1A in the width direction, the rotation stopping member 8 is operated to allow the rotation of the inner ring of the rotating support 4 with respect to the base plate 31 so that the seat mounting frame 5 can be rotated with respect to the support base 3. After that, each of the seat sets 1A, which is fixed to the seat mounting frame 5, is rotated by 90 degrees in a direction indicated by an arrow C about the rotating support 4. As a result of the movement of the seat set 1A in the width direction of the seat set 1A in the procedure described above, a center of rotation of the rotating support 4 is located in the vicinity of an end portion of the seat set 1A in the width direction. Thus, even when the seat set 1A is rotated, interference of the seats 1 themselves with the side wall 2a of the vehicle cabin 2 can be avoided. As a result, the backrest surfaces 10 of the seats 1 are oriented in the traveling direction of the vehicle or the direction opposite to the traveling direction. At this time, a space is defined between the seats 1 after being rotated and the side wall 2a of the vehicle cabin 2.

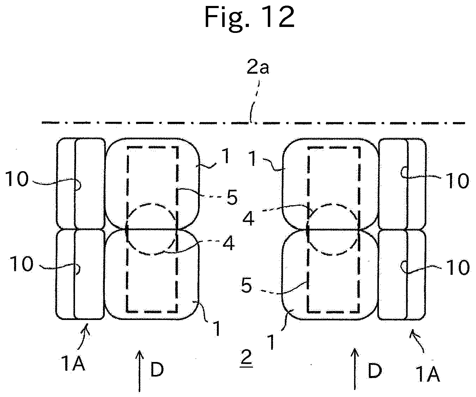

Then, as illustrated in FIG. 12, after each of the seat sets 1A is pushed toward the side wall 2a of the vehicle cabin 2 along a direction indicated by an arrow D, the change of the arrangement of the seat sets to the cross arrangement is completed. At this time, a distance between the side wall 2a of the vehicle cabin 2 and the seats 1 can be suitably set. After the completion of the change of the arrangement of each of the seat sets 1A, the seat mounting frame 5 is fixed with respect to the support base 3 with use of the rotation stopping member 8 and the seat fixing member 7.

The procedure of changing the long arrangement of the seat sets 1A to the cross arrangement has been described. The cross arrangement of the seat sets 1A can be changed to the long arrangement in a reverse procedure. In this case, each of the seat sets 1A can be freely moved in the width direction of the seat 1 with respect to the support base 3. Thus, after being rearranged in the long arrangement, two seat sets 1A adjacent to each other can be tightly arranged without leaving any gap therebetween. Thus, a space of the vehicle cabin can be effectively used.

As described above, with the switching unit for a seat arrangement according to the present invention, the arrangement of the seats 1 can easily be changed in the vehicle cabin of the vehicle such as a railway vehicle or a bus. In addition, after the arrangement is changed, the seats 1 can be moved in the width direction to be fixed at suitable positions. Thus, convenience in use of the seats 1 can be improved.

## Claims

1. A switching unit for a seat arrangement, which is configured to change a direction of arrangement of seats (1) in a vehicle cabin of a vehicle, the switching unit comprising:
a support base (3), which is to be fixed to a vehicle cabin (2), and is configured to support the seats (1);
a rotating support (4), which is fixed to the support base (3), and is configured to serve as a center of rotation of the seats (1) ;
a seat mounting frame (5) configured to allow the seats (1) to be fixed thereto;
linear guides (6), which are arranged between the seat mounting frame (5) and the rotating support (4), and is configured to guide movement of the seat mounting frame (5) with respect to the rotating support (4) along the width direction of the seats (1);
a rotation stopping member (8), which is provided to the support base (3), and is configured to lock rotation of the seat mounting frame (5) caused by the rotating support (4); and
a seat fixing member (7) configured to lock movement of the seat mounting frame (5) with respect to the rotating support (4).

2. The switching unit for a seat arrangement according to claim 1,
wherein the rotating support (4) includes an inner ring and an outer ring, which are assembled through intermediation of a plurality of rolling elements so as to be rotatable with respect to each other, and
wherein any one of the inner ring and the outer ring is fixed to the support base (3), and another one of the inner ring and the outer ring is fixed to the linear guides (6).

3. The switching unit for a seat arrangement according to claim 1,
wherein each of the linear guides (6) includes:
a track rail to be fixed to the seat mounting frame (5) ; and
moving blocks being movable in a longitudinal direction of the track rail, and
wherein the seat fixing member (7) is provided to the rotating support (4), and is configured to grip the track rail to lock movement of the track rails.

## Patentansprüche

1. Wechseleinheit für eine Sitzanordnung, die zum Ändern einer Anordnungsrichtung von Sitzen (1) in einer Fahrzeugkabine eines Fahrzeugs konfiguriert ist, wobei die Wechseleinheit umfasst:
eine Trägerbasis (3), die an einer Fahrzeugkabine (2) zu befestigen ist und zum Tragen der Sitze (1) konfiguriert ist;
einen Drehträger (4), der an der Trägerbasis (3) befestigt ist und so konfiguriert ist, dass er als ein Drehzentrum der Sitze (1) dient;
einen Sitzbefestigungsrahmen (5), der so gestaltet ist, dass die Sitze (1) daran befestigt werden können;
Linearführungen (6), die zwischen dem Sitzbefestigungsrahmen (5) und dem Drehträger (4) angeordnet sind und so konfiguriert sind, dass sie die Bewegung des Sitzbefestigungsrahmen (5) in Bezug auf den Drehträger (4) entlang der Breitenrichtung der Sitze (1) führen;
ein Drehstoppelement (8), das an der Trägerbasis (3) vorgesehen und so konfiguriert ist, dass es die durch den Drehträger (4) verursachte Drehung des Sitzbefestigungsrahmens (5) blockiert; und
ein Sitzbefestigungselement (7), das so konfiguriert ist, dass es die Bewegung des Sitzbefestigungsrahmens (5) in Bezug auf den Drehträger (4) blockiert.

2. Die Wechseleinheit für eine Sitzanordnung nach Anspruch 1,
wobei der Drehträger (4) einen Innenring und einen Außenring umfasst, die durch Vermittlung einer Vielzahl von Wälzkörpern so zusammengefügt sind, dass sie in Bezug aufeinander drehbar sind, und
wobei entweder der Innenring oder der Außenring an der Trägerbasis (3) befestigt ist, und ein anderer des Innenrings und des Außenrings an den Linearführungen (6) befestigt ist.

3. Die Wechseleinheit für eine Sitzanordnung nach Anspruch 1,
wobei jede der Linearführungen (6) umfasst:
eine an dem Sitzbefestigungsrahmens (5) zu befestigende Führungsschiene; und
Bewegungsblöcke, die in einer Längsrichtung der Führungsschiene beweglich sind, und
wobei das Sitzbefestigungselement (7) an dem Drehträger (4) vorgesehen und so konfiguriert ist, dass es die Führungsschiene ergreift, um die Bewegung der Führungsschienen zu blockieren.

## Revendications

1. Unité de commutation d'un agencement de sièges, configurée pour changer la direction d'agencement de sièges (1) dans une cabine de véhicule d'un véhicule, l'unité de commutation comprenant :
une base de support (3), qui est destinée à être fixée dans une cabine de véhicule (2) et est configurée pour supporter les sièges (1) ;
un support rotatif (4), qui est fixé sur la base de support (3) et est configuré pour servir de centre de rotation des sièges (1) ;
une trame de montage de siège (5) configurée pour permettre d'y fixer les sièges (1) ;
des guides linéaires (6), qui sont agencés entre la trame de montage de siège (5) et le support rotatif (4) et sont configurés pour guider le déplacement de la trame de montage de siège (5) par rapport au support rotatif (4) en direction de la largeur des sièges (1) ;
un élément d'arrêt de rotation (8), qui est pourvu sur la base de support (3) et est configuré pour bloquer la rotation de la trame de montage de siège (5) provoquée par le support rotatif (4) ; et
un élément de fixation de siège (7) configuré pour bloquer le déplacement de la trame de montage de siège (5) par rapport au support rotatif (4).

2. Unité de commutation pour un agencement de sièges selon la revendication 1,
dans laquelle le support rotatif (4) comprend un anneau interne et un anneau externe, qui sont assemblés par l'intermédiaire d'une pluralité d'éléments de roulement de manière à pouvoir tourner l'un par rapport à l'autre, et
dans laquelle un anneau quelconque parmi l'anneau interne et l'anneau externe est fixé à la base de support (3), et l'autre anneau parmi l'anneau interne et l'anneau externe est fixé aux guides linéaires (6).

3. Unité de commutation pour un agencement de sièges selon la revendication 1,
dans laquelle chacun des guides linéaires (6) comprend :
un rail de roulement destiné à être fixé à la trame de montage de siège (5) ; et
des blocs mobiles qui se déplacent en direction longitudinale du rail de roulement, et
dans laquelle l'élément de fixation de siège (7) est pourvu sur le support rotatif (4) et est configuré pour saisir le rail de roulement afin de bloquer le déplacement des rails de roulement.
